# EUROPEAN PATENT APPLICATION

(11) **EP 4 429 321 A1**
(43) Date of publication of application: **11.09.2024**
(21) Application number: 22897779.9
(22) Date of filing: 22.11.2022
(51) Int. Cl.: H04W 28/06

(54) **COMMUNICATION METHOD AND APPARATUS**

(30) Priority: 29.11.2021 CN 202111429638
(71) Applicant: Huawei Technologies Co., Ltd., Shenzhen, Guangdong 518129 (CN)
(72) Inventor: LIAO, Shuri, Shenzhen, Guangdong 518129 (CN); CHEN, Erkai, Shenzhen, Guangdong 518129 (CN); CAO, Youlong, Shenzhen, Guangdong 518129 (CN); XU, Rui, Shenzhen, Guangdong 518129 (CN); DOU, Shengyue, Shenzhen, Guangdong 518129 (CN)
(74) Representative: Grünecker Patent- und Rechtsanwälte PartG mbB
(86) International application number: PCT/CN2022/133388
(87) International publication number: WO 2023/093696

(57) **Abstract**

This application provides a communication method and apparatus, to resolve a problem of invalid communication caused because the conventional technology is applied to a packet loss scenario of an XR service, so that device power consumption is reduced, and communication resources are saved. In this application, a first communication device obtains information about a data unit to which a data packet belongs, where the data unit includes one or more data packets. The first communication device discards a data packet that is being transmitted and a data packet that is not transmitted that are in the data unit. The first communication device sends indication information to a second communication device, where the indication information includes the information about the data unit. According to the communication method provided in embodiments of this application, the first communication device sends the information about the data unit to the second communication device, so that the second communication device can release, based on the information about the data unit, a HARQ process corresponding to the data unit. Therefore, power consumption of the second communication device is reduced, and communication resources are saved.

## Description

This application claims priority to Chinese Patent Application No. 202111429638.3, filed with the China National Intellectual Property Administration on November 29, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus for an extended reality (extended reality, XR) service.

### BACKGROUND

In a wireless communication network, an extended reality (extended reality, XR) technology has advantages such as multi-view and strong interaction, can provide brand-new visual experience for a user, and has great application value and business potential. XR includes technologies such as virtual reality (virtual reality, VR), augmented reality (augmented reality, AR), and mixed reality (mixed reality, MR), and can be widely applied to many fields such as entertainment, gaming, medical care, advertising, industry, online education, the tactile internet, and engineering.

With continuous development and improvement of VR devices, content and platforms, and 5th generation (5th Generation, 5G) or even 6th generation (6th Generation, 6G) network systems, researching an effective transmission manner of an XR service and improving a network capacity of the XR service can effectively promote development of end-to-end (End-to-End, E2E) industries. Therefore, the effective transmission manner of the XR service is of great practical value.

### SUMMARY

This application provides a communication method and apparatus, to resolve a problem of invalid communication caused because the conventional technology is applied to a packet loss scenario of an XR service, so that device power consumption can be reduced, and communication resources can be saved.

The communication method provided in embodiments of this application may be applied to an uplink of a communication system, or may be applied to a downlink of a communication system.

According to a first aspect, an embodiment of this application provides a communication method. The method includes: A first communication device obtains information about a data unit to which a data packet belongs, where the data unit includes one or more data packets; the first communication device discards a data packet that is being transmitted and a data packet that is not transmitted that are in the data unit; and the first communication device sends first indication information to a second communication device, where the first indication information includes the information about the data unit.

According to the communication method provided in this embodiment of this application, the first communication device sends the information about the data unit to the second communication device, so that the second communication device can release, based on the information about the data unit, a HARQ process corresponding to the data unit. Therefore, power consumption of the second communication device is reduced, and communication resources are saved.

With reference to the first aspect, in some implementations of the first aspect, the first indication information includes identification information of the data unit.

With reference to the first aspect, in some implementations of the first aspect, the first communication device sends second indication information to the second communication device, where the second indication information indicates identification information of a data unit to which each transport block (TB) belongs.

With reference to the first aspect, in some implementations of the first aspect, the first communication device stops a hybrid automatic repeat request (HARQ) process of a TB corresponding to the data packet that is being transmitted and that is in the data unit.

With reference to the first aspect, in some implementations of the first aspect, the first indication information includes a HARQ process number of the HARQ.

With reference to the first aspect, in some implementations of the first aspect, the first indication information is transmitted by using radio resource control (RRC) information, media access control control element (MAC CE) information, a physical downlink control channel (PDCCH), or a physical downlink shared channel (PDSCH).

According to a second aspect, an embodiment of this application provides a communication method. The method includes: A second communication device receives first indication information from a first communication device, where the first indication information includes information about a data unit, and the data unit includes one or more data packets. The second communication device stops or skips starting, based on the first indication information, a discontinuous reception retransmission timer (DRX Retransmission Timer) of a hybrid automatic repeat request (HARQ) process of a transport block (TB) corresponding to the data unit.

According to the communication method provided in this embodiment of this application, the second communication device may stop or skip starting, based on the information about the data unit received from the first communication device, the discontinuous reception retransmission timer (DRX Retransmission Timer) of the HARQ process of the TB corresponding to the data unit. Therefore, power consumption of the second communication device is reduced, and communication resources are saved.

With reference to the second aspect, in some implementations of the second aspect, the first indication information includes identification information of the data unit.

With reference to the second aspect, in some implementations of the second aspect, the second communication device stops or skips starting, based on the identification information, the DRX retransmission timer of the HARQ process of the TB corresponding to the data unit.

With reference to the second aspect, in some implementations of the second aspect, the first indication information includes a HARQ process number of the HARQ.

With reference to the second aspect, in some implementations of the second aspect, the second communication device stops or skips starting the DRX retransmission timer of the HARQ process based on the HARQ process number.

With reference to the second aspect, in some implementations of the second aspect, the first indication information is transmitted by using RRC, a MAC CE, a PDCCH, or a PDSCH.

According to a third aspect, an embodiment of this application provides a communication method. The method includes: A second communication device obtains information about a data unit to which a data packet belongs, where the data unit includes one or more data packets; the second communication device discards a data packet that is being transmitted and a data packet that is not transmitted that are in the data unit; and the second communication device sends third indication information to a first communication device, where the third indication information includes the information about the data unit.

With reference to the third aspect, in some implementations of the third aspect, the third indication information includes identification information of the data unit.

With reference to the third aspect, in some implementations of the third aspect, the second communication device sends buffer status report (BSR) to the first communication device, where the BSR includes an amount of to-be-transmitted data in a buffer of the second communication device.

With reference to the third aspect, in some implementations of the third aspect, the second communication device stops a HARQ process of a transport block (TB) corresponding to the data packet that is being transmitted and that is in the data unit.

With reference to the third aspect, in some implementations of the third aspect, the third indication information includes a HARQ process number of the HARQ.

With reference to the third aspect, in some implementations of the third aspect, the third indication information is transmitted by using RRC, a MAC CE, a PUCCH, or a PUSCH.

According to a fourth aspect, an embodiment of this application provides a communication method. The method includes: A first communication device receives third indication information from a second communication device, where the third indication information includes information about a data unit, and the data unit includes one or more data packets; and the first communication device releases, based on the third indication information, a HARQ process of a TB corresponding to the data unit.

With reference to the fourth aspect, in some implementations of the fourth aspect, the third indication information includes identification information of the data unit.

With reference to the fourth aspect, in some implementations of the fourth aspect, the first communication device releases, based on the identification information, the HARQ process of the TB corresponding to the data unit.

With reference to the fourth aspect, in some implementations of the fourth aspect, the third indication information includes a HARQ process number of the HARQ.

With reference to the fourth aspect, in some implementations of the fourth aspect, the first communication device releases the HARQ process based on the HARQ process number.

With reference to the fourth aspect, in some implementations of the fourth aspect, the first communication device receives a BSR from the second communication device, where the BSR includes an amount of to-be-transmitted data in a buffer of the second communication device. The first communication device determines, based on the BSR, the amount of data that needs to be transmitted by the second communication device.

According to a fifth aspect, an embodiment of this application provides a communication apparatus. The apparatus includes a module configured to perform the method according to any one of the first aspect or the possible implementations of the first aspect, or a module configured to perform the method according to any one of the fourth aspect or the possible implementations of the fourth aspect.

According to a sixth aspect, an embodiment of this application provides a communication apparatus. The apparatus includes a module configured to perform the method according to any one of the second aspect or the possible implementations of the second aspect, or a module configured to perform the method according to any one of the third aspect or the possible implementations of the third aspect.

According to a seventh aspect, an embodiment of this application provides a communication apparatus. The apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method according to the first aspect or the possible implementations of the first aspect, the method according to the second aspect or the possible implementations of the second aspect, the method according to the third aspect or the possible implementations of the third aspect, or the method according to the fourth aspect or the possible implementations of the fourth aspect by using a logic circuit or by executing code instructions.

According to an eighth aspect, an embodiment of this application provides a computer-readable storage medium. The computer-readable storage medium stores a computer program or instructions. When the computer program or the instructions are executed by a computer device, the method according to the first aspect or the possible implementations of the first aspect is implemented, the method according to the second aspect or the possible implementations of the second aspect is implemented, the method according to the third aspect or the possible implementations of the third aspect is implemented, or the method according to the fourth aspect or the possible implementations of the fourth aspect is implemented.

According to a ninth aspect, an embodiment of this application provides a computer program product. The computer program product includes a computer program or instructions. When the computer program or the instructions are executed by a computer device, the method according to the first aspect or the possible implementations of the first aspect is implemented, the method according to the second aspect or the possible implementations of the second aspect is implemented, the method according to the third aspect or the possible implementations of the third aspect is implemented, or the method according to the fourth aspect or the possible implementations of the fourth aspect is implemented.

According to a tenth aspect, an embodiment of this application provides a communication system. The communication system includes one or more of the following: the communication apparatus provided in the fifth aspect, the sixth aspect, or the seventh aspect, the computer-readable storage medium provided in the eighth aspect, and the computer program product provided in the ninth aspect.

### BRIEF DESCRIPTION OF DRAWINGS

FIG. 1 is a diagram of a possible communication architecture according to an embodiment of this application;
FIG. 2 is a schematic flowchart of a possible communication method according to an embodiment of this application;
FIG. 3 is a schematic flowchart of another possible communication method according to an embodiment of this application;
FIG. 4 is a diagram of a possible DRX cycle according to an embodiment of this application;
FIG. 5 is a schematic flowchart of still another possible communication method according to an embodiment of this application;
FIG. 6 is a schematic flowchart of yet another possible communication method according to an embodiment of this application;
FIG. 7 is a schematic flowchart of still yet another possible communication method according to an embodiment of this application;
FIG. 8 is a block diagram of a communication apparatus according to an embodiment of this application; and
FIG. 9 is another block diagram of a communication apparatus according to an embodiment of this application.

### DESCRIPTION OF EMBODIMENTS

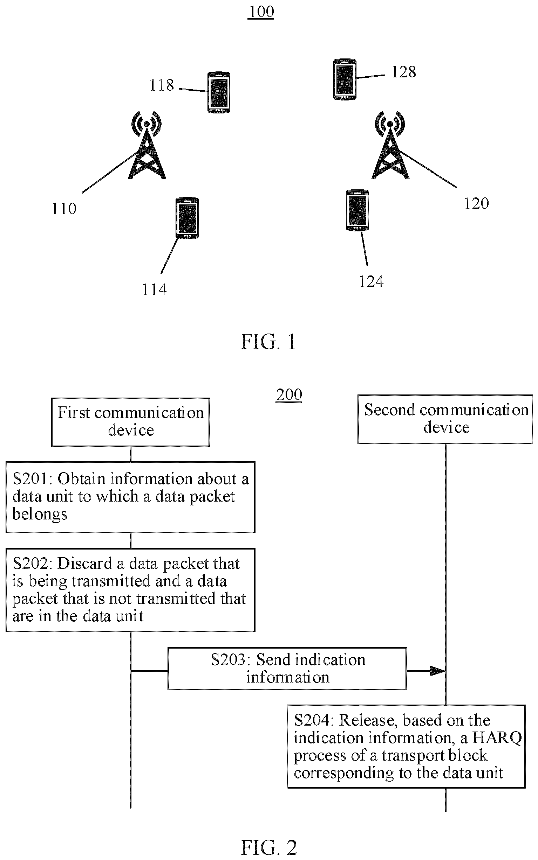

A method and an apparatus provided in embodiments of this application may be used in a communication system. FIG. 1 is a diagram of a structure of a communication system. The communication system 100 includes one or more access network devices (where an access network device 110 and an access network device 120 are shown in the figure), and one or more terminals that communicate with the one or more access network devices. A terminal 114 and a terminal 118 shown in FIG. 1 communicate with the access network device 110, and a terminal 124 and a terminal 128 shown in FIG. 1 communicate with the access network device 120. It may be understood that the access network device and the terminal may also be referred to as communication devices.

The method and the apparatus provided in embodiments of this application may be used in various communication systems, for example, a 4th generation (4th generation, 4G) communication system, a 4.5G communication system, a 5G communication system, a system integrating a plurality of communication systems, or a future evolved communication system (for example, a 5.5G communication system or a 6G communication system). The various communication systems are, for example, a long term evolution (long term evolution, LTE) system, a new radio (new radio, NR) system, a wireless fidelity (wireless fidelity, Wi-Fi) system, a communication system related to the 3rd generation partnership project (3rd generation partnership project, 3GPP), and another communication system of this type.

The method and the apparatus provided in embodiments of this application may be used in architectures of a plurality of communication systems. FIG. 2 is a diagram of an architecture of the communication system. In the architecture of the communication system, the terminal accesses a core network via an access network (radio access network, RAN) device. The terminal may establish a connection to a data network (data network, DN) or a server in a data network via an access network and the core network. The data network may include, for example, an operator service, an Internet (Internet), a third-party service, or the like. In the 4G communication system, the connection may be a packet data network connection (packet data network connection, PDN connection) or a bearer. In the 5G communication system, the connection may be a protocol data unit session (protocol data unit session, PDU Session). In the future communication system such as the 6th generation (6th generation, 6G) communication system, the connection may be a PDU session, a PDN connection, or another similar concept. This is not limited in embodiments of this application. In embodiments of this application, the connection established between the terminal and the data network or the server may also be referred to as a session.

A first communication device in this application may be any device having a wireless transceiver function. The first communication device includes but is not limited to an evolved NodeB (NodeB or eNB or e-NodeB, evolved NodeB) in LTE, a gNodeB (gNodeB or gNB) or a transmission reception point (transmission receiving point/transmission reception point, TRP) in NR, a base station that subsequently evolves in 3GPP, an access node in a Wi-Fi system, a wireless relay node, a wireless backhaul node, a core network device, or the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The access network device may be a server (for example, a cloud server), a radio controller in a cloud radio access network (cloud radio access network, CRAN) scenario, a central unit (central unit, CU), and/or a distributed unit (distributed unit, DU). Alternatively, the access network device may be a server, a wearable device, a machine communication device, a vehicle-mounted device, a smart screen, or the like. The following uses an example in which the access network device is a base station for description. The plurality of access network devices may be base stations of a same type, or may be base stations of different types. The base station may communicate with a terminal device, or may communicate with a terminal device via a relay station. The terminal device may communicate with a plurality of base stations using different technologies. For example, the terminal device may communicate with a base station supporting an LTE network, may communicate with a base station supporting a 5G network, or may support dual connectivity to a base station supporting an LTE network and a base station supporting a 5G network.

A second communication device in this application may be a device having a wireless transceiver function, and may be deployed on land, including an indoor device, an outdoor device, a handheld device, a wearable device, or a vehicle-mounted device, may be deployed on water (such as on a ship, or the like), or may be deployed in the air (for example, on an airplane, a balloon, a satellite, or the like). The terminal may be a mobile phone (mobile phone), a tablet computer (Pad), a computer having a wireless transceiver function, a virtual reality (virtual reality, VR) terminal device, an augmented reality (augmented reality, AR) terminal device, a terminal in industrial control (industrial control), a vehicle-mounted terminal device, a terminal in self-driving (self-driving), a terminal in assisted driving, a terminal in remote medical (remote medical), a terminal in a smart grid (smart grid), a terminal in transportation safety (transportation safety), a terminal in a smart city (smart city), a terminal in a smart home (smart home), or the like. An application scenario is not limited in embodiments of this application. The terminal sometimes may also be referred to as a terminal device, user equipment (user equipment, UE), an access terminal device, a vehicle-mounted terminal, an industrial control terminal, a LTE unit, a LTE station, a mobile station, a remote station, a remote terminal device, a mobile device, a UE terminal device, a wireless communication device, a machine terminal, a UE agent, a UE apparatus, or the like. The terminal may be fixed or mobile.

By way of example and not limitation, in this application, the second communication device may be a wearable device. The wearable device may also be referred to as a wearable intelligent device, and is a general term of wearable devices such as glasses, gloves, watches, clothes, and shoes that are intelligently designed and developed for daily wear by using wearable technologies. The wearable device is a portable device that can be directly worn on a body or integrated into clothes or an accessory of a user. The wearable device is more than a hardware device. The wearable device implements powerful functions through software support, data exchange, and cloud interaction. Generalized wearable intelligent devices include full-featured and large-size devices that can implement complete or partial functions without depending on smartphones, such as smart watches, smart glasses, or the like, and devices that dedicated to only one type of application and need to work with other devices such as smartphones, such as various smart bands, smart jewelry, or the like for monitoring physical signs.

In this application, the second communication device may be a terminal in an internet of things (internet of things, IoT) system. The IoT is an important component of future information technology development. A main technical feature of the IoT is to connect an object to a network by using communication technologies, to implement an intelligent network of human-machine interconnection and thing-thing interconnection. The second communication device in this application may be a second communication device in machine type communication (machine type communication, MTC). The second communication device in this application may be a vehicle-mounted module, a vehicle-mounted assembly, a vehicle-mounted part, a vehicle-mounted chip, or a vehicle-mounted unit equipped by a vehicle as one or more parts or units. The vehicle uses the vehicle-mounted module, the vehicle-mounted assembly, the vehicle-mounted part, the vehicle-mounted chip, or the vehicle-mounted unit equipped by the vehicle, to implement the method in this application. Therefore, embodiments of this application may be applied to an internet of vehicles, for example, vehicle-to-everything (vehicle-to-everything, V2X), long term evolution-vehicle (long term evolution-vehicle, LTE-V), vehicle-to-vehicle (vehicle-to-vehicle, V2V), or the like.

Alternatively, the second communication device in this application may be a VR terminal, an AR terminal, or an MR terminal. The VR terminal, the AR terminal, and the MR terminal may all be referred to as XR terminals. For example, the XR terminal may be a headmounted device (for example, a helmet or glasses), or may be an all-in-one machine, or may be a television, a display, a car, a vehicle-mounted device, a tablet, a smart screen, a holographic projector, a video player, a remote control robot, a tactile internet terminal, or the like. The XR terminal can present XR data to the user, and the user can experience diversified XR services by wearing or using the XR terminal. The XR terminal may access a network in a wireless or wired manner, for example, access the network by using a Wi-Fi or 5G system.

It may be understood that, with evolution of the network, names of the foregoing network elements may change, and functions of the network elements may also be combined, separated, or even changed. However, these changes do not mean that they depart from the application scope of the solutions of this application.

The XR service has a requirement on data integrity. For example, for transmission of an XR video frame, currently, a commonly used method is to divide a picture frame into dozens of internet protocol (Internet Protocol, IP) packets at a network transport layer, and transmit the packets to a core network. Then, the IP data packets are transmitted to UE via a radio access network (Radio Access Network, RAN). During network transmission, if an error occurs in transmission of one IP packet, the entire picture frame cannot be restored.

In addition, the XR service has a requirement on a delay. For example, for the transmission of the XR video frame, a video frame that exceeds a delay limit cannot be normally displayed when a terminal side decodes the video frame. In consideration of integrity of the transmission of the video frame, for a video frame in which a transmission error has occurred or that exceeds the delay limit, a data packet that is being transmitted and a data packet that is not transmitted that belong to the video frame may be discarded at a transmitting end.

Because the data integrity is considered, a packet loss occurs on the transmitting end. If a receiving end does not perform corresponding processing, power consumption is increased and resources are wasted. For example, for downlink transmission of the XR service, if having determined that an error or timeout occurs in data unit transmission, a base station side discards a data packet that is being transmitted and a data packet that is not transmitted that are in the data unit. The data unit includes a plurality of data packets. The terminal side normally waits for a HARQ process corresponding to transmitted data of the data unit, to receive a retransmitted data packet corresponding to the data unit in which the transmission error occurs and perform hybrid automatic repeat request (hybrid automatic repeat request, HARQ) combination. However, from a perspective of the terminal side, it is determined that the error or the timeout occurs in the data unit, and even if the data unit is received, the data unit is useless. If the terminal waits to receive the data unit, power consumption of the terminal is increased. For another example, for uplink transmission of the XR service, if having determined that an error or timeout occurs in data unit transmission, the terminal discards a data packet that is being transmitted and a data packet that is not transmitted that are in the data unit. A base station side still performs scheduling based on a previously received BSR before a new buffer status report (buffer status report, BSR) of the terminal is reported. Consequently, uplink scheduling resources are wasted. In addition, retransmitted data packets belonging to a same data unit are still retransmitted and occupy a HARQ process. Consequently, resources and the process are wasted. Therefore, how to avoid invalid communication when a packet loss occurs in the XR service, to reduce device power consumption and save communication resources becomes an urgent problem to be resolved.

FIG. 2 is a schematic flowchart of a communication method 200 according to an embodiment of this application. The flowchart shown in FIG. 2 relates to a first communication device and a second communication device. The communication method provided in this embodiment of this application may be applied to an uplink of a communication system, or may be applied to a downlink of a communication system. The communication method 200 includes but is not limited to the following steps.

S201: Obtain information about data to which a data packet belongs.

The first communication device obtains the information about the data unit to which the data packet belongs. The data unit includes one or more data packets, and a data packet is discarded in the data unit.

For example, when the first communication device determines that an error or timeout occurs in transmission of a data unit, due to a data integrity requirement of an XR service, the first communication device discards the data unit. The data unit is usually divided into a plurality of data packets for transmission. Therefore, the first communication device discards a data packet that is being transmitted and a data packet that is not transmitted that are in the data unit. The first communication device obtains information about the data unit in which the packet loss exists, for example, identification information of the data unit.

S202: Discard the data packet that is being transmitted and the data packet that is not transmitted that are in the data unit.

Because the data unit is usually divided into the plurality of data packets for transmission, the first communication device discards the data packet that is being transmitted and the data packet that is not transmitted that are in the data unit.

S203: Send indication information.

The first communication device sends the indication information to the second communication device, where the indication information includes the information about the data unit, for example, the identification information of the data unit.

S204: Release, based on the indication information, a HARQ process of a TB corresponding to the data unit.

For example, after receiving the indication information, the second communication device determines, based on the indication information, for example, the identification information of the data unit, that the packet loss exists in the data unit. Therefore, the second communication device releases, based on the identification information of the data unit, the HARQ process of the TB corresponding to the data unit.

According to the communication method provided in this embodiment of this application, the information about the data unit in which the packet loss exists is sent to the second communication device, so that the second communication device can release, based on the information about the data unit, the HARQ process corresponding to the data unit. Therefore, power consumption of the second communication device is reduced, and communication resources are saved.

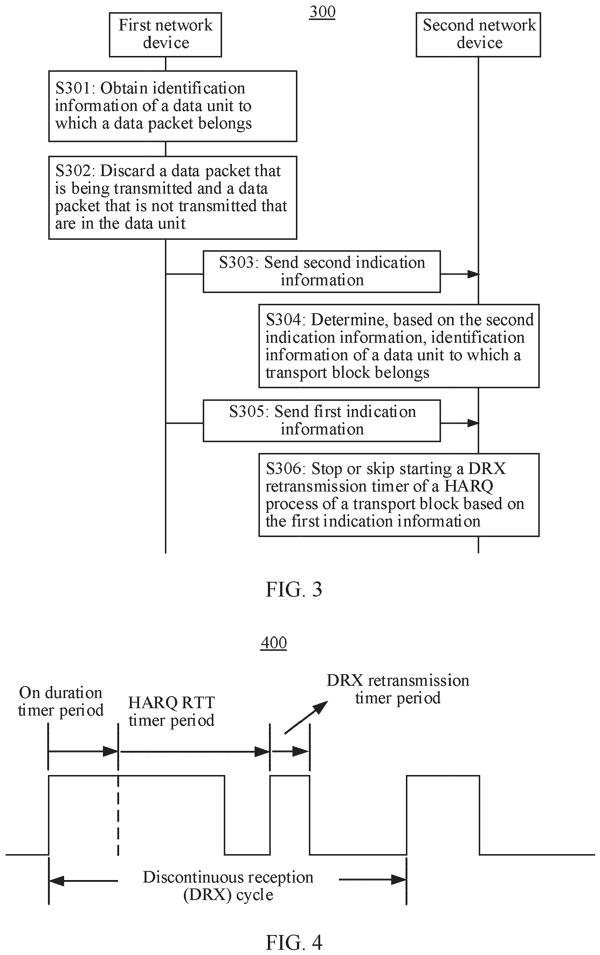

Based on FIG. 2, FIG. 3 is a schematic flowchart of another communication method 300 according to an embodiment of this application. The communication method 300 is applied to a downlink. The flowchart shown in FIG. 3 relates to a first communication device and a second communication device. The communication method 300 includes but is not limited to the following steps.

S301: Obtain identification information of a data unit to which a data packet belongs.

The first communication device sends an XR service data unit to the second communication device, where one data unit includes a plurality of data packets. When an error occurs in transmission of a data unit on a first communication device side, or timeout occurs in the transmission of the data unit, due to a data integrity requirement of an XR service, there is no need to continue to transmit the data unit. The first communication device discards a data packet that is being transmitted and a data packet that is not transmitted that are in the data unit. Before discarding the data unit, the first communication device obtains identification information of a data unit to which each data packet in the XR service data unit belongs, to identify, by using the data packet, the data unit corresponding to the data packet.

S302: Discard the data packet that is being transmitted and the data packet that is not transmitted that are in the data unit.

When the error occurs in the transmission of the data unit on the first communication device side, or the timeout occurs in the transmission of the data unit, due to the data integrity requirement of the XR service, there is no need to continue to transmit the data unit. The first communication device discards the data packet that is being transmitted and the data packet that is not transmitted that are in the data unit.

S303: Send second indication information.

The first communication device sends the second indication information to the second communication device. The second indication information is information corresponding to the identification information of the data unit to which each data packet in the XR service data unit belongs.

In a possible implementation, the second indication information is identification information of a data unit to which each transport block (Transport Block, TB) belongs. One TB may include one or more data packets, and the one or more data packets included in the TB belong to one data unit.

In a possible implementation, the second indication information may be transmitted by using RRC, a MAC CE, or a PDCCH. A transmission manner of the second indication information is not limited in this application.

S304: Determine, based on the second indication information, the identification information of the data unit to which each transport block (TB) belongs.

After receiving the second indication information, the second communication device may determine, by using the second indication information, the identification information of the data unit to which each TB belongs.

S305: Send first indication information.

The first communication device sends the first indication information to the second communication device. The first indication information includes identification information of the data unit discarded by the first communication device.

In a possible implementation, the first indication information may be transmitted by using radio resource control (radio resource control, RRC) information, media access control control element (Media Access Control control element, MAC CE) information, or a physical downlink control channel (physical downlink control channel, PDCCH). A transmission manner of the first indication information is not limited in this application.

S306: Stop or skip starting a discontinuous reception retransmission timer (DRX Retransmission Timer) of a HARQ process of a TB based on the first indication information.

The second communication device releases, based on the first indication information, the HARQ process of the TB corresponding to the data unit in which the packet loss occurs.

In a possible implementation, the second communication device may determine, based on the first indication information, the identification information of the data unit discarded by the first communication device, and further determine the corresponding TB by using the identification information. The second communication device stops or skips starting the DRX retransmission timer of the HARQ process of the TB, to enter a low power consumption state.

The DRX retransmission timer is explained as follows:
A discontinuous reception (Discontinuous Reception, DRX) technology is introduced into a 5G new radio (New Radio, NR) standard for power saving. A basic mechanism of the DRX is to configure a DRX cycle for a terminal. FIG. 4 is a diagram of a DRX cycle. In an on duration timer (On Duration Timer) period of the DRX cycle, the terminal normally monitors a physical downlink control channel (Physical Downlink Control Channel, PDCCH). In another period, the terminal has a chance to enter a sleep state and does not monitor the PDCCH to reduce power consumption. For the XR service, generation and arrival of data packets are not continuous. Therefore, the DRX may be configured on a terminal side to reduce power consumption. To ensure that a terminal configured with the DRX monitors a downlink retransmission PDCCH, time windows: a HARQ RTT timer and a DRX retransmission timer are defined in a standard. When a TB in a downlink HARQ process fails to be decoded, the terminal may be in a sleep state and does not monitor the PDCCH in a HARQ RTT timer period. In addition, when the HARQ RTT timer expires, and the TB received in the HARQ process is not successfully decoded, the terminal starts a DRX retransmission timer for the HARQ process. When the DRX retransmission timer runs, the terminal monitors the PDCCH used for HARQ retransmission.

For example, the first communication device needs to send two data units: a data unit 1 and a data unit 2. Data packets in the data unit 1 are sent on a TB 1 to a TB 5, and data packets in the data unit 2 are sent on a TB 6 to a TB 10. When sending a TB 8, the first communication device finds that an error exists in transmission of the data unit 2. In this case, the TB 8 that is being transmitted and a TB 9 and the TB 10 that are not transmitted that are in the data unit 2 are no longer sent. The first communication device sends the second indication information to the second communication device, in other words, sends a correspondence between the TB 1 to the TB 10 and the data units to the second communication device. In addition, the first communication device sends the first indication information to the second communication device, in other words, sends to the second communication device, identification information of the data unit 2 in which a packet loss occurs. The second communication device receives eight TBs: the TB 1 to the TB 8. The second communication device determines, based on the second indication information, that the TB 1 to the TB 5 belong to the data unit 1, and the TB 6 to the TB 8 belong to the data unit 2. If determining, based on the first indication information, that the packet loss occurs in the data unit 2, the second communication device skips starting or stops corresponding DRX retransmission timers for HARQ processes of the received TB 6 to TB 8. In other words, after a HARQ RTT timer expires, the DRX retransmission timers are not started, or DRX retransmission timers that have been started are stopped. In this way, the second communication device may enter the low power consumption state.

According to the communication method and apparatus provided in this embodiment of this application, the first communication device sends the identification information of the data unit in which the packet loss exists to the second communication device, so that the second communication device can skip starting or stop the corresponding DRX retransmission timer based on the information. Therefore, power consumption of the second communication device is reduced, and communication resources are saved.

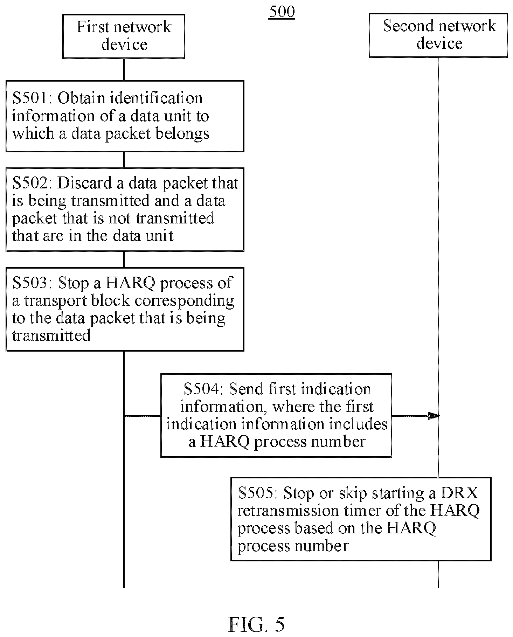

Based on FIG. 2, FIG. 5 is a schematic flowchart of still another communication method 500 according to an embodiment of this application. The communication method 500 is applied to a downlink. The flowchart shown in FIG. 5 relates to a first communication device and a second communication device. The communication method 500 includes but is not limited to the following steps.

S501: Obtain identification information of a data unit to which a data packet belongs.

For a detailed process, refer to the foregoing descriptions of S301.

S502: Discard a data packet that is being transmitted and a data packet that is not transmitted that are in the data unit.

For a detailed process, refer to the foregoing descriptions of S302.

S503: Stop a HARQ process of a TB corresponding to the data packet that is being transmitted.

A packet loss exists in a data unit on a first communication device side, and the first communication device discards the data packet that is being transmitted and the data packet that is not transmitted that are in the data unit. In addition, the first communication device may further stop the HARQ process of the TB corresponding to the data packet that is being transmitted and that is in the data unit. Specifically, the first communication device may clear information about the HARQ process, and release a HARQ process.

S504: Send first indication information, where the first indication information includes a number of the stopped HARQ process.

The first communication device sends the first indication information to the second communication device. The first indication information includes the number of the stopped HARQ process described in S503.

In a possible implementation, the first indication information may be transmitted by using RRC, a MAC CE, or a PDCCH. A transmission manner of the first indication information is not limited in this application.

S505: Stop or skip starting a DRX retransmission timer of the HARQ process based on the HARQ process number.

The second communication device releases, based on the first indication information, the HARQ process of the TB corresponding to the data unit in which the packet loss occurs.

In a possible implementation, the second communication device may determine, based on the first indication information, the HARQ process number corresponding to the data unit discarded by the first communication device. The second communication device directly stops or skips starting a DRX retransmission timer of the HARQ process based on the HARQ process number, to enter a low power consumption state.

For example, a base station needs to send two data units: a data unit 1 and a data unit 2. Data packets in the data unit 1 are sent on a TB 1 to a TB 5, and data packets in the data unit 2 are sent on a TB 6 to a TB 10. When sending a TB 8, the base station finds that an error exists in transmission of the data unit 2. In this case, the TB 8 that is being transmitted and a TB 9 and the TB 10 that are not transmitted that are in the data unit 2 are no longer sent. In addition, the base station stops HARQ processes of TBs corresponding to data packets that are being transmitted and that are in the data unit 2, that is, processes 6 to 8. The base station sends first indication information to a terminal, in other words, sends HARQ process numbers to the terminal. The terminal receives eight TBs: the TB 1 to the TB 8. The terminal determines, based on the first indication information, that the TB 1 to the TB 5 belong to the data unit 1, and the TB 6 to the TB 8 belong to the data unit 2. The terminal determines numbers of stopped HARQ processes on a base station side based on the first indication information, and skips starting or stops corresponding DRX retransmission timers for the HARQ processes of the received TB 6 to TB 8 based on the HARQ process numbers. In other words, after a HARQ RTT timer expires, the DRX retransmission timers are not started, or DRX retransmission timers that have been started are stopped. In this way, the terminal may enter a low power consumption state.

According to the communication method and apparatus provided in this embodiment of this application, the first communication device sends the HARQ process number of the data unit in which the packet loss exists to the second communication device, so that the second communication device can skip starting or stop the corresponding DRX retransmission timer based on the information. Therefore, power consumption of the second communication device is reduced, and communication resources are saved.

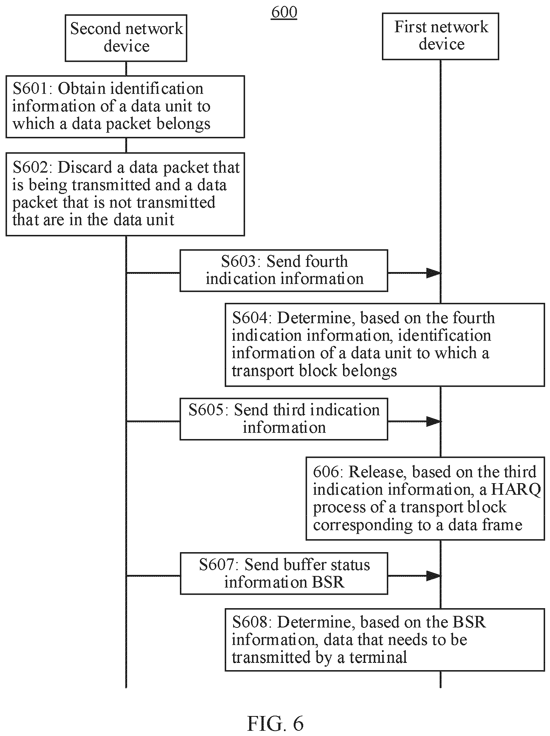

Based on FIG. 2, FIG. 6 is a schematic flowchart of yet another communication method 600 according to an embodiment of this application. The communication method 600 is applied to an uplink. The flowchart shown in FIG. 6 relates to a first communication device and a second communication device. The communication method 600 includes but is not limited to the following steps.

S601: Obtain identification information of a data unit to which a data packet belongs.

The second communication device sends an XR service data unit to the first communication device, where one data unit includes a plurality of data packets. When an error occurs in transmission of a data unit on a second communication device side, or timeout occurs in the transmission of the data unit, due to a data integrity requirement of an XR service, there is no need to continue to transmit the data unit. The second communication device discards a data packet that is being transmitted and a data packet that is not transmitted that are in the data unit. Before discarding the data unit, the second communication device obtains identification information of a data unit to which each data packet in the XR service data unit belongs, to identify, by using the identification information, the data unit corresponding to the data packet.

S602: Discard the data packet that is being transmitted and the data packet that is not transmitted that are in the data unit.

When the error occurs in the transmission of the data unit on the second communication device side, or the timeout occurs in the transmission of the data unit, due to the data integrity requirement of the XR service, there is no need to continue to transmit the data unit. The second communication device discards the data packet that is being transmitted and the data packet that is not transmitted that are in the data unit.

Optionally, S603: Send fourth indication information.

The second communication device sends the fourth indication information to the first communication device. The fourth indication information is information corresponding to the identification information of the data unit to which each data packet in the XR service data unit belongs.

In a possible implementation, the fourth indication information is the identification information of the data unit to which each data packet belongs. One data unit may include a plurality of data packets.

In a possible implementation, the fourth indication information may be transmitted by using RRC, a MAC CE, or a PUCCH. A transmission manner of the fourth indication information is not limited in this application.

Optionally, S604: Determine, based on the fourth indication information, identification information of a data unit to which a TB belongs.

After the first communication device receives identification information of the data packet of the data unit in which the packet loss exists, because scheduling is implemented via the first communication device, the first communication device may obtain a TB corresponding to each data packet. Therefore, the first communication device may also obtain an identifier of a data unit to which each TB belongs.

S605: Send third indication information.

The second communication device sends the third indication information to the first communication device. The third indication information includes identification information of a data unit discarded by the first communication device.

In a possible implementation, the third indication information may be transmitted by using the RRC, the MAC CE, or the physical uplink control channel (physical uplink control channel, PUCCH). A transmission manner of the third indication information is not limited in this application.

S606: Release, based on the third indication information, a HARQ process of a TB corresponding to the data unit.

The first communication device releases, based on the third indication information, the HARQ process of the TB corresponding to the data unit in which the packet loss occurs. Therefore, resources are saved.

S607: Send BSR information.

When the packet loss occurs on the second communication device side, the second communication device sends the BSR information to the first communication device. The BSR information indicates a current amount of to-be-transmitted data in a buffer of the second communication device.

S608: Determine, based on the BSR information, the data that needs to be transmitted by the second communication device.

The first communication device determines the amount of the to-be-transmitted data in the buffer of the second communication device based on the BSR information. Because the packet loss occurs on the second communication device, the amount of the to-be-transmitted data in the buffer is decreased. The first communication device may adjust scheduling resources in real time based on the decrease of the amount of data in the buffer. Therefore, communication resources can be saved.

For example, a terminal needs to send two data units: a data unit 1 and a data unit 2. Data packets in the data unit 1 are sent on a TB 1 to a TB 5, and data packets in the data unit 2 are sent on a TB 6 to a TB 10. When sending a TB 8, the terminal finds that an error exists in transmission of the data unit 2. In this case, the TB 8 that is being transmitted and a TB 9 and the TB 10 that are not transmitted that are in the data unit 2 are no longer sent. The terminal sends fourth indication information to a base station, in other words, sends a correspondence between the TB 1 to the TB 10 and the data units to the terminal, and sends third indication information to the base station, in other words, sends to the base station, identification information of the data unit 2 in which the packet loss occurs. After receiving eight TBs: the TB 1 to the TB 8, the base station determines, based on the fourth indication information, that the TB 1 to the TB 5 belong to the data unit 1, and the TB 6 to the TB 8 belong to the data unit 2. If determining, based on the third indication information, that the packet loss occurs in the data unit 2, the base station releases HARQ processes of the received TB 6 to TB 8. The base station further receives BSR information from the terminal, and determines an amount of to-be-transmitted data in a buffer of the terminal based on the BSR information. Because the terminal discards the TB 9 and the TB 10, the amount of the to-be-transmitted data in the buffer is decreased. The base station may adjust scheduling resources in real time based on the decrease of the amount of data in the buffer. Therefore, communication resources can be saved.

According to the communication method and apparatus provided in this embodiment of this application, the second communication device sends the identification information of the data unit in which the packet loss exists to the first communication device, so that the first communication device can release the corresponding HARQ process based on the information, and adjust the scheduling resources in real time based on the BSR information. Therefore, the communication resources are saved.

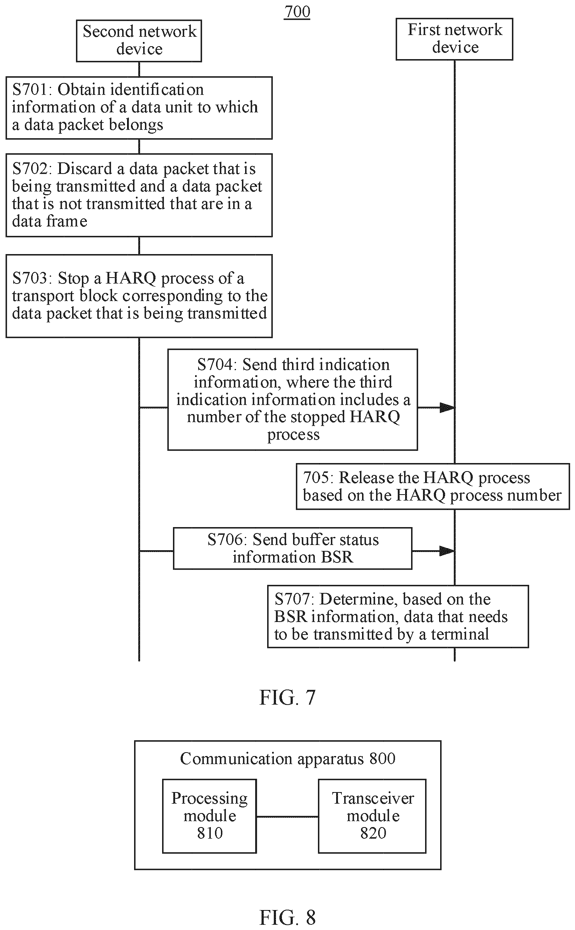

Based on FIG. 2, FIG. 7 is a schematic flowchart of still yet another communication method 700 according to an embodiment of this application. The communication method 700 is applied to an uplink. The flowchart shown in FIG. 7 relates to a first communication device and a second communication device. The communication method 700 includes but is not limited to the following steps.

S701: Obtain identification information of a data unit to which a data packet belongs.

For a detailed process, refer to the foregoing descriptions of S601.

S702: Discard a data packet that is being transmitted and a data packet that is not transmitted that are in the data unit.

For a detailed process, refer to the foregoing descriptions of S602.

S703: Stop a HARQ process of a TB corresponding to the data packet that is being transmitted.

A packet loss exists in a data unit on a second communication device side, and the second communication device discards the data packet that is being transmitted and the data packet that is not transmitted that are in the data unit. In addition, the second communication device may further stop the HARQ process of the TB corresponding to the data packet that is being transmitted and that is in the data unit. Specifically, the second communication device may clear information about the HARQ process, and release a HARQ process number.

S704: Send third indication information, where the third indication information includes a number of the stopped HARQ process.

The second communication device sends the third indication information to the first communication device. The third indication information includes the number of the stopped HARQ process described in S703.

In a possible implementation, the third indication information may be transmitted by using RRC, a MAC CE, or a PUCCH. A transmission manner of the third indication information is not limited in this application.

S705: Release, based on the HARQ process number, a HARQ process of a TB corresponding to the data unit.

S706: Send BSR information.

When the packet loss occurs on the second communication device side, the second communication device sends the BSR information to the first communication device. The BSR information indicates a current amount of to-be-transmitted data in a buffer of the second communication device.

S707: Determine, based on the BSR information, the data that needs to be transmitted by the second communication device.

The first communication device determines the amount of the to-be-transmitted data in the buffer of the second communication device based on the BSR information. Because the packet loss occurs on the second communication device, the amount of the to-be-transmitted data in the buffer is decreased. The first communication device may adjust scheduling resources in real time based on the decrease of the amount of data in the buffer. Therefore, communication resources can be saved.

For example, a terminal needs to send two data units: a data unit 1 and a data unit 2. Data packets in the data unit 1 are sent on a TB 1 to a TB 5, and data packets in the data unit 2 are sent on a TB 6 to a TB 10. When sending a TB 8, the terminal finds that an error exists in transmission of the data unit 2. In this case, the TB 8 that is being transmitted and a TB 9 and the TB 10 that are not transmitted that are in the data unit 2 are no longer sent. In addition, the terminal stops HARQ processes of TBs corresponding to data packets that are being transmitted and that are in the data unit 2, that is, processes 6 to 8. The terminal sends third indication information to a base station, in other words, sends HARQ process numbers to the base station. The base station receives eight TBs: the TB 1 to the TB 8, and determines numbers of stopped HARQ processes on a terminal side based on the third indication information. The base station releases the HARQ processes of the received TB 6 to TB 8 based on the HARQ process numbers. The base station further receives BSR information from the terminal, and determines an amount of to-be-transmitted data in a buffer of the terminal based on the BSR information. Because the terminal discards the TB 9 and the TB 10, the amount of the to-be-transmitted data in the buffer is decreased. The base station may adjust scheduling resources in real time based on the decrease of the amount of data in the buffer. Therefore, communication resources can be saved.

According to the communication method and apparatus provided in this embodiment of this application, the second communication device sends a HARQ process number of the data unit in which the packet loss exists to the first communication device, so that the first communication device can release the corresponding HARQ process based on the information, and adjust the scheduling resources in real time based on the BSR information. Therefore, the communication resources are saved.

FIG. 8 is a block diagram of a communication apparatus according to an embodiment of this application. The communication apparatus may be configured to implement functions of the first communication device in the foregoing method embodiments, and therefore can also implement beneficial effects of the foregoing method embodiments. In embodiments of this application, the communication method provided in embodiments of this application may be applied to a downlink, or may be applied to an uplink. The communication apparatus may be the first communication device in the foregoing method embodiments, or may be a module (such as a chip) used in the first communication device.

As shown in FIG. 8, the communication apparatus 800 includes a processing module 810 and a transceiver module 820. The communication apparatus 800 is configured to implement the functions of the first communication device in the embodiment corresponding to FIG. 2, FIG. 3, FIG. 5, FIG. 6, or FIG. 7.

For example, the processing module 810 is configured to: obtain information about a data unit to which a data packet belongs, where the data unit includes one or more data packets; and discard a data packet that is being transmitted and a data packet that is not transmitted that are in the data unit.

The transceiver module 820 is configured to send first indication information to a second communication device, where the first indication information includes the information about the data unit. According to the foregoing communication method, the first communication device may send information about a data unit in which a packet loss exists to the second communication device, so that the second communication device can stop or skip starting, based on the information, a discontinuous reception retransmission timer (DRX Retransmission Timer) of a hybrid automatic repeat request (HARQ) process of a transport block TB corresponding to the data unit. Therefore, power consumption of the second communication device is reduced, and communication resources are saved.

Optionally, the first indication information includes identification information of the data unit.

In an optional manner, the processing module 810 is further configured to stop the hybrid automatic repeat request (HARQ) process of the TB corresponding to the data packet that is being transmitted and that is in the data unit.

In an optional manner, the transceiver module 820 is further configured to send second indication information to the second communication device, where the second indication information indicates identification information of a data unit to which each transport block (TB) belongs.

Optionally, the first indication information includes a HARQ process number.

Optionally, the first indication information is transmitted by using radio resource control (RRC) information, media access control control element (MAC CE) information, a physical downlink control channel (PDCCH), or a physical downlink shared channel (PDSCH).

In an alternative manner, the transceiver module 820 is configured to receive third indication information from a second communication device, where the third indication information includes information about a data unit, and the data unit includes one or more data packets.

In an optional manner, the transceiver module 820 is further configured to receive a BSR from the second communication device, where the BSR includes an amount of to-be-transmitted data in a buffer of the second communication device.

In an optional manner, the processing module 810 is further configured to release, based on the third indication information, a HARQ process of a TB corresponding to the data unit.

Optionally, the third indication information includes identification information of the data unit.

In an optional manner, the processing module 810 is further configured to release, based on the identification information, the HARQ process of the TB corresponding to the data unit.

Optionally, the third indication information includes a HARQ process number of the HARQ.

In an optional manner, the processing module 810 is further configured to release the HARQ process based on the HARQ process number.

The foregoing descriptions are merely partial examples in which the communication apparatus 800 is configured to implement the method embodiment shown in FIG. 2, FIG. 3, FIG. 5, FIG. 6, or FIG. 7. For functions of the processing module 810 and the transceiver module 820 in the communication apparatus 800, refer to operations of the first communication device in the embodiment corresponding to FIG. 2, FIG. 3, FIG. 5, FIG. 6, or FIG. 7.

The communication apparatus 800 may be alternatively configured to implement functions of the second communication device in the embodiment corresponding to FIG. 2, FIG. 3, FIG. 5, FIG. 6, or FIG. 7.

For example, the transceiver module 820 is configured to receive first indication information from a first communication device, where the first indication information includes information about a data unit, and the data unit includes one or more data packets.

In an optional manner, the transceiver module 820 is further configured to receive second indication information from the first communication device, where the second indication information indicates identification information of a data unit to which each transport block (TB) belongs.

Optionally, the first indication information includes identification information of the data unit.

In an optional manner, the transceiver module 820 is further configured to receive buffer status report (BSR) from the first communication device, where the BSR includes an amount of to-be-transmitted data in a buffer of the first communication device.

The processing module 810 stops or skips starting, based on the first indication information, a discontinuous reception retransmission timer (DRX Retransmission Timer) of a hybrid automatic repeat request (HARQ) process of a transport block (TB) corresponding to the data unit.

Optionally, the first indication information includes a HARQ process number of the HARQ. In an optional manner, the processing module 810 is further configured to stop or skip starting the DRX retransmission timer of the HARQ process based on the HARQ process number.

Optionally, the first indication information is transmitted by using RRC, a MAC CE, a PDCCH, or a PDSCH.

In an alternative manner, the processing module 810 is configured to obtain information about a data unit to which a data packet belongs, where the data unit includes one or more data packets. The second communication device discards a data packet that is being transmitted and a data packet that is not transmitted that are in the data unit.

In an optional manner, the processing module 820 is further configured to send third indication information to a first communication device, where the third indication information includes information about the data unit.

Optionally, the third indication information includes identification information of the data unit.

Optionally, the third indication information includes a HARQ process number of the HARQ.

In an optional manner, the processing module 820 is further configured to send buffer status report (BSR) to the first communication device, where the BSR includes an amount of to-be-transmitted data in a buffer of the second communication device.

In an optional manner, the processing module 810 is further configured to stop a HARQ process of a transport block (TB) corresponding to the data packet that is being transmitted and that is in the data unit.

Optionally, the third indication information is transmitted by using RRC, a MAC CE, a PUCCH, or a PUSCH.

The foregoing descriptions are merely partial examples in which the communication apparatus 800 is configured to implement the method embodiment shown in FIG. 2, FIG. 3, FIG. 5, FIG. 6, or FIG. 7. For functions of the processing module 810 and the transceiver module 820 in the communication apparatus 800, refer to operations of the second communication device in the embodiment corresponding to FIG. 2, FIG. 3, FIG. 5, FIG. 6, or FIG. 7.

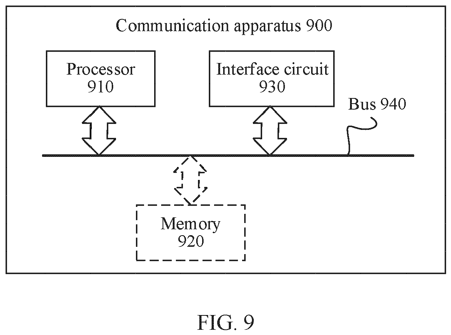

FIG. 9 is another block diagram of a communication apparatus according to an embodiment of this application. As shown in FIG. 9, the communication apparatus 900 includes a processor 910 and an interface circuit 930. The processor 910 and the interface circuit 930 are coupled to each other. It may be understood that the interface circuit 930 may be a transceiver or an input/output interface.

Optionally, the communication apparatus 900 may further include a memory 920. The memory 920 is configured to store instructions executed by the processor 920, store input data needed by the processor 910 to run instructions, or store data generated after the processor 910 runs instructions.

When the communication apparatus 900 is configured to implement functions of the first communication device and the second communication device shown in FIG. 2, FIG. 3, FIG. 5, FIG. 6, or FIG. 7, the processor 910 is configured to implement functions of the processing module 810, and the interface circuit 930 is configured to implement functions of the transceiver module 820.

Optionally, the communication apparatus 900 further includes a bus 940. The processor 910, the interface circuit 930, and the memory 920 may communicate with each other by using the bus 940.

An embodiment of this application further provides a system chip. The system chip includes an input/output interface, at least one processor, at least one memory, and a bus. The at least one memory is configured to store instructions. The at least one processor is configured to invoke the instructions in the at least one memory, to perform operations of the methods in the foregoing aspects.

In embodiments of this application, it should be noted that the foregoing method embodiments in embodiments of this application may be applied to a processor, or may be implemented by a processor. The processor may be an integrated circuit chip and has a signal processing capability. In an implementation process, steps in the foregoing method embodiments may be implemented by using a hardware integrated logical circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, or a discrete hardware component. The processor may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, a register, or the like. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the system and the methods described in this specification includes but is not limited to these memories and any memory of another proper type.

All or a part of the foregoing embodiments may be implemented by using software, hardware, firmware, or any combination thereof. When software is used to implement embodiments, all or a part of embodiments may be implemented in a form of a computer program product. The computer program product may include one or more computer instructions. When the computer program instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium that can be accessed by the computer, or a data storage device, such as a server, a data center, or the like, integrating one or more usable media. The usable medium may be a magnetic medium (for example, a floppy disk, a hard disk, or a magnetic disk), an optical medium (for example, a DVD), a semiconductor medium (for example, a solid-state drive (Solid-State Drive, SSD)), or the like.

A person of ordinary skill in the art may be aware that, in combination with the examples described in embodiments disclosed in this application, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory, a random access memory, a magnetic disk, a compact disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first communication device, information about a data unit to which a data packet belongs, wherein the data unit comprises one or more data packets;
discarding, by the first communication device, a data packet that is being transmitted and a data packet that is not transmitted that are in the data unit; and
sending, by the first communication device, first indication information to a second communication device, wherein the first indication information comprises the information about the data unit.

2. The method according to claim 1, wherein the first indication information comprises identification information of the data unit.

3. The method according to claim 1 or 2, wherein the method further comprises:
sending, by the first communication device, second indication information to the second communication device, wherein the second indication information indicates identification information of a data unit to which each transport block TB belongs.

4. The method according to claim 1 or 2, wherein the method further comprises:
stopping, by the first communication device, a hybrid automatic repeat request HARQ process of a TB corresponding to the data packet that is being transmitted and that is in the data unit.

5. The method according to claim 4, wherein the first indication information comprises a HARQ process number of the HARQ process.

6. The method according to any one of claims 1 to 5, wherein the first indication information is transmitted by using radio resource control RRC information, media access control control element MAC CE information, a physical downlink control channel PDCCH, or a physical downlink shared channel PDSCH.

7. A communication method, comprising:
receiving, by a second communication device, first indication information from a first communication device, wherein the first indication information comprises information about a data unit, and the data unit comprises one or more data packets; and
stopping or skipping starting, by the second communication device based on the first indication information, a discontinuous reception retransmission timer DRX retransmission timer of a hybrid automatic repeat request HARQ process of a transport block TB corresponding to the data unit.

8. The method according to claim 7, wherein the method further comprises:
receiving, by the second communication device, second indication information from the first communication device, wherein the second indication information indicates identification information of a data unit to which each TB belongs.

9. The method according to claim 7 or 8, wherein the first indication information comprises identification information of the data unit.

10. The method according to claim 9, wherein the method further comprises:
stopping or skipping starting, by the second communication device based on the identification information, the DRX retransmission timer of the HARQ process of the TB corresponding to the data unit.

11. The method according to claim 7, wherein the first indication information comprises a HARQ process number of the HARQ.

12. The method according to claim 11, wherein the method further comprises:
stopping or skipping starting, by the second communication device, the DRX retransmission timer of the HARQ process based on the HARQ process number.

13. The method according to any one of claims 7 to 12, wherein the first indication information is transmitted by using RRC, a MAC CE, a PDCCH, or a PDSCH.

14. A communication method, comprising:
obtaining, by a second communication device, information about a data unit to which a data packet belongs, wherein the data unit comprises one or more data packets;
discarding, by the second communication device, a data packet that is being transmitted and a data packet that is not transmitted that are in the data unit; and
sending, by the second communication device, third indication information to a first communication device, wherein the third indication information comprises the information about the data unit.

15. The method according to claim 14, wherein the third indication information comprises identification information of the data unit.

16. The method according to claim 14 or 15, wherein the method further comprises:
sending, by the second communication device, buffer status report BSR to the first communication device, wherein the BSR comprises an amount of to-be-transmitted data in a buffer of the second communication device.

17. The method according to claim 14 or 15, wherein the method further comprises:
stopping, by the second communication device, a HARQ process of a transport block TB corresponding to the data packet that is being transmitted and that is in the data unit.

18. The method according to claim 17, wherein the third indication information comprises a HARQ process number of the HARQ.

19. The method according to any one of claims 14 to 18, wherein the third indication information is transmitted by using RRC, a MAC CE, a PUCCH, or a PUSCH.

20. A communication method, comprising:
receiving, by a first communication device, third indication information from a second communication device, wherein the third indication information comprises information about a data unit, and the data unit comprises one or more data packets; and
releasing, by the first communication device based on the third indication information, a HARQ process of a TB corresponding to the data unit.

21. The method according to claim 20, wherein the third indication information comprises identification information of the data unit.

22. The method according to claim 21, wherein the method further comprises:
releasing, by the first communication device based on the identification information, the HARQ process of the TB corresponding to the data unit.

23. The method according to claim 20, wherein the third indication information comprises a HARQ process number of the HARQ.

24. The method according to claim 23, wherein the method further comprises: releasing, by the first communication device, the HARQ process based on the HARQ process number.

25. The method according to any one of claims 20 to 24, wherein the method further comprises:
receiving, by the first communication device, a BSR from the second communication device, wherein the BSR comprises an amount of to-be-transmitted data in a buffer of the second communication device; and
determining, by the first communication device based on the BSR, the amount of data that needs to be transmitted by the second communication device.

26. A communication apparatus, used in a first communication device, and comprising a module configured to perform the method according to any one of claims 1 to 6 or claims 20 to 25.

27. A communication apparatus, used in a second communication device, and comprising a module configured to perform the method according to any one of claims 7 to 13 or claims 14 to 19.

28. A communication apparatus, used in a first communication device, and comprising a processor, wherein the processor is coupled to a memory, and the memory is configured to store a program or instructions; and when the program or the instructions are executed by the processor, the apparatus is enabled to perform the method according to any one of claims 1 to 6 or the method according to any one of claims 20 to 25.

29. A communication apparatus, used in a second communication device, and comprising a processor, wherein the processor is coupled to a memory, and the memory is configured to store a program or instructions; and when the program or the instructions are executed by the processor, the apparatus is enabled to perform the method according to any one of claims 7 to 13 or the method according to any one of claims 14 to 19.

30. A computer-readable storage medium, wherein the computer-readable storage medium stores a computer program or instructions; and when the computer program or the instructions are executed by a computer device, the method according to any one of claims 1 to 6 is implemented, the method according to any one of claims 7 to 13 is implemented, the method according to any one of claims 14 to 19 is implemented, or the method according to any one of claims 20 to 25 is implemented.

31. A computer program product, wherein the computer program product comprises instructions; and when the instructions are executed by a computer device, the method according to any one of claims 1 to 6 is implemented, the method according to any one of claims 7 to 13 is implemented, the method according to any one of claims 14 to 19 is implemented, or the method according to any one of claims 20 to 25 is implemented.

32. A communication system, comprising one or more of the following: the communication apparatus according to any one of claims 26 to 29.
